# EUROPEAN PATENT APPLICATION

(11) **EP 4 679 251 A1**
(43) Date of publication of application: **14.01.2026**
(21) Application number: 25185441.0
(22) Date of filing: 26.06.2025
(51) Int. Cl.: G06F 3/06, G06F 9/50, G06F 12/08

(54) **SYSTEMS AND METHODS FOR TIERED MEMORY ALLOCATIONS**

(30) Priority: 10.07.2024 US 202463669630 P; 22.10.2024 US 202418923353
(71) Applicant: Samsung Electronics Co., Ltd., Suwon-si, Gyeonggi-do 16677 (KR)
(72) Inventor: LIU, Wenjie, San Jose, CA, 95134 (US); BRYSON, Matthew, San Jose, CA, 95134 (US); SHANMUGAM MADESWARAN, Rajiv, San Jose, CA, 95134 (US); BIKONDA, Naga Sanjana, San Jose, CA, 95134 (US); MARAM, Vishwanath, San Jose, CA, 95134 (US)
(74) Representative: Kuhnen & Wacker Patent- und Rechtsanwaltsbüro PartG mbB

(57) **Abstract**

Systems and methods for tiered memory allocations are disclosed. A system may include a first memory device; a second memory device; and a processor coupled to the first memory device and the second memory device. The processor may be configured to: identify a first application; identify a characteristic associated with the first memory device; estimate performance of the first application based on the characteristic associated with the first memory device; determine that the performance satisfies a threshold performance; and based on determining that the performance satisfies the threshold performance, allocate a region of the second memory device to the first application.

## Description

### FIELD

One or more aspects of embodiments according to the present disclosure relate to memory devices, and more particularly, to systems and methods for allocating applications in tiered memory.

### BACKGROUND

Applications may perform computations on large amounts of data. As such types of computations increase, it may be desirable to employ efficient and cost-effective data processing solutions.

The above information disclosed in this Background section is only for enhancement of understanding of the background of the present disclosure, and therefore, it may contain information that does not form prior art.

### SUMMARY

One or more embodiments of the present disclosure are directed to a system comprising a first memory device, a second memory device, and a processor coupled to the first memory device and the second memory device. The processor may be configured to: identify a first application; identify a characteristic associated with the first memory device; estimate performance of the first application based on the characteristic associated with the first memory device; determine that the performance satisfies a threshold performance; and based on determining that the performance satisfies the threshold performance, allocate a region of the second memory device to the first application.

In some embodiments, the first memory device is associated with a first tier of a memory hierarchy, and the second memory device is associated with a second tier of the memory hierarchy lower than the first tier.

In some embodiments, the processor is further configured to: identify a parameter associated with the first application; and select the first memory device based on the parameter.

In some embodiments, the parameter is associated with at least one of bandwidth, capacity, or latency.

In some embodiments, the parameter includes a weight and the processor is configured to identify, based on the weight, a tier of a memory hierarchy to which the first memory device is associated.

In some embodiments, the characteristic includes at least one of an access latency or throughput of the first memory device, and the threshold performance is satisfied based on the access latency being lower than a maximum access latency or the throughput being higher than a minimum throughput.

In some embodiments, the performance includes execution time of the first application.

In some embodiments, the performance is estimated for the first application based on historical information.

In some embodiments, the historical information includes second performance information of the first application.

In some embodiments, the processor is further configured to: identify a third performance of the first application allocated to the second memory device; determine that the third performance is below the threshold performance; and based on determining that the third performance is below the threshold performance, move data stored in the second memory device to the first memory device.

One or more embodiments of the present disclosure are also directed to a method that includes: identifying a first application; identifying a characteristic associated with a first memory device; estimating performance of the first application based on the characteristic associated with the first memory device; determining that the performance satisfies a threshold performance; and based on determining that the performance satisfies the threshold performance, allocating a region of a second memory device to the first application.

In some embodiments, the first memory device is associated with a first tier of a memory hierarchy, and the second memory device is associated with a second tier of the memory hierarchy lower than the first tier.

In some embodiments, the method further includes: identifying a parameter associated with the first application; and selecting the first memory device based on the parameter.

In some embodiments, the parameter is associated with at least one of bandwidth, capacity, or latency.

In some embodiments, the parameter includes a weight and the method further includes identifying, based on the weight, a tier of a memory hierarchy to which the first memory device is associated.

In some embodiments, the characteristic includes at least one of an access latency or throughput of the first memory device, and the threshold performance is satisfied based on the access latency being lower than a maximum access latency or the throughput being higher than a minimum throughput.

In some embodiments, the performance includes execution time of the first application.

In some embodiments, the performance is estimated for the first application based on historical information.

In some embodiments, the historical information includes second performance information of the first application.

In some embodiments, the method further includes identifying a third performance of the first application allocated to the second memory device; determining that the third performance is below the threshold performance; and based on determining that the third performance is below the threshold performance, moving data stored in the second memory device to the first memory device.

These and other features, aspects and advantages of the embodiments of the present disclosure will be more fully understood when considered with respect to the following detailed description, appended claims, and accompanying drawings. Of course, the actual scope of the invention is defined by the appended claims.

### BRIEF DESCRIPTION OF THE DRAWINGS

Non-limiting and non-exhaustive embodiments of the present embodiments are described with reference to the following figures, wherein like reference numerals refer to like parts throughout the various views unless otherwise specified.
FIG. 1 depicts a block diagram of a system for storing data in a tiered memory system according to one or more embodiments;
FIG. 2 depicts a block diagram of a memory manager according to one or more embodiments;
FIG. 3 depicts a flow diagram of a process for allocating memory to an application in a tiered memory system according to one or more embodiments;
FIG. 4 depicts a flow diagram of a process for tiered memory management according to one or more embodiments; and
FIG. 5 depicts another flow diagram of a process for allocating memory to an application in a tiered memory system according to one or more embodiments.

### DETAILED DESCRIPTION

Hereinafter, example embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, descriptions thereof may not be repeated. Further, in the drawings, the relative sizes of elements, layers, and regions may be exaggerated and/or simplified for clarity.

Embodiments of the present disclosure are described below with reference to block diagrams and flow diagrams. Thus, it should be understood that each block of the block diagrams and flow diagrams may be implemented in the form of a computer program product, an entirely hardware embodiment, a combination of hardware and computer program products, and/or apparatus, systems, computing devices, computing entities, and/or the like carrying out instructions, operations, steps, and similar words used interchangeably (for example the executable instructions, instructions for execution, program code, and/or the like) on a computer-readable storage medium for execution. For example, retrieval, loading, and execution of code may be performed sequentially such that one instruction is retrieved, loaded, and executed at a time. In some example embodiments, retrieval, loading, and/or execution may be performed in parallel such that multiple instructions are retrieved, loaded, and/or executed together. Thus, such embodiments can produce specifically-configured machines performing the steps or operations specified in the block diagrams and flow diagrams. Accordingly, the block diagrams and flow diagrams support various combinations of embodiments for performing the specified instructions, operations, or steps.

In addition, a feature of embodiments of the present disclosure may be combined or combined with one or more other features, partially or entirely, and may be operated in various ways, and an embodiment may be implemented independently of one or more other embodiments, or in conjunction with the one or more other embodiments.

With the increased use of artificial intelligence, the computation and storage requirements have also increased. The use of high performant memory such as a dynamic random access memory (DRAM)) that is attached to a central computing unit (CPU) of a host computing device may have lower latencies than a storage medium (e.g., a Compute Express Link (CXL) memory) that is attached over a data communications link. Although a memory device like DRAM may offer lower latencies, they may also be expensive and provide limited capacities.

It may be desirable to have a storage system with different types of memory (e.g., a combination of CPU-attached memory (e.g., DRAM), CPU-independent memory (e.g., CXL memory), and/or network attached storage (e.g., solid state drive (SSD)) that are arranged in a memory hierarchy or tier, where the memory tier assigned to a memory device may be based on a characteristic (e.g., latency) of the memory device. Taking latency as an example, the tier assigned to the memory device may increase as the latency associated with the medium decreases. For example, the main memory may be assigned to a higher tier in the memory hierarchy than CXL memory, and CXL memory may be assigned to a higher tier than SSD.

Although performance of a memory device may increase the higher the device is located in the memory hierarchy, there may be less of such device to be used, causing applications to compete for memory resources which may lead to system performance degradation. The cost of using a memory device in terms of energy consumption, monetary cost, and/or the like, may also increase the higher the memory device is in the memory hierarchy.

A tiered memory system may offer flexibility as to where data is to be placed, and allow data to be moved (migrated) among tiers even after the placement of the data. Data may be migrated based on, for example, access or predicted access of the data such that data that is accessed more often than other data may be promoted to a higher memory tier (e.g., DRAM), and data that is accessed infrequently is demoted to a lower memory tier (e.g., CXL memory). Moving data, however, may be costly as it may damage the higher tier utilization, incur additional traffic, and occupy bandwidth.

In regards to determining the placement of data, not all data needs to be placed in the highest memory tier as not all data needs to be accessed as fast as possible. For example, if an entity uses the storage system for data archive verification, the access to the data need not be fast. However, if the data is needed for performing real-time estimations for autonomous driving, the data may need to be accessed fast.

A service level agreement (SLA) with an entity using the storage system may indicate an acceptable level of performance to be provided by the storage system. The acceptable level of performance may relate to a maximum access latency, a minimum throughput, a maximum execution time for an application, and/or the like. In some cases, the acceptable level of performance may be lower than performance provided by a memory in the upper tier of the memory hierarchy.

In general terms, embodiments of the present disclosure are directed to systems and methods for allocating memory to an application from a tier of memory in a memory hierarchy. In some embodiments, the memory allocation is based on hints provided to a memory manager during the allocation. The hints may relate to preferences of the memory allocation in terms of bandwidth, latency, and/or capacity. In some embodiments, the memory allocation is based on predicted performance of the application in a tier of memory. Performance of the application may be predicted based on, for example, historical information associated with the tier. In some embodiments, the selected tier is one that allows the application to execute at a level that achieves or satisfies the SLA and that minimizes the executing cost.

In some embodiments, the memory manager is configured to periodically check the performance of one or more tiers as they undergo different loads. An application allocated to one memory tier may be migrated to another tier if, for example, SLA is not satisfied based on a current allocation. In some embodiments, the compute and memory requirements of the migration from one tier to another may be balanced against the cost of the migration.

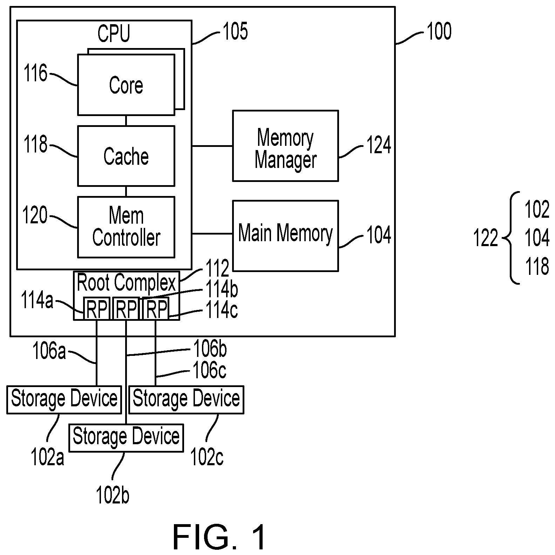

FIG. 1 depicts a block diagram of a system for storing data in a tiered memory system according to one or more embodiments. The system may include a host computing device (referred to as the "host") 100 coupled to a one or more endpoints such as, for example, one or more storage or memory devices 102a-102c (collectively referenced as "storage media" 102).

The host 100 includes a processor 105, main memory 104, and root complex (RC) interface 112. The processor 105 may include one or more central processing unit (CPU) cores 116 configured to execute computer program instructions and process data stored in a cache memory 118 (also simply referred to as "memory" or "cache"). The cache 118 may be dedicated to one of the CPU cores 116 or shared by various ones of the CPU cores.

The cache 118 may be coupled to a memory controller 120 which in turn is coupled to the main memory 104. The main memory 104 may include, for example, a dynamic random access memory (DRAM) storing computer program instructions and/or data (collectively referenced as data) used by an application executed by a core 116. The data may be loaded into the cache memory 118, and the application may consume the data directly from the cache memory. If the data to be consumed is not already in the cache, the process may need to query other memory devices in the memory hierarchy to find the data. For example, if the data that is sought is not in the cache 118, the process may query the main memory 104, and if not in the main memory 104, query the storage medium 102.

In some embodiments, the cache 118, main memory 104, and/or storage media 102 (collectively referenced as memory device 122) may be included in a tiered memory system that allows memory tiering to deliver an appropriate cost or performance profile. In this regard, the different types of memory devices may be organized in the memory hierarchy or tier based on a characteristic of the memory device. The characteristic may be access latency, throughput, and/or the like. In some embodiments, the tier or level of a memory device increases as the access latency decreases and/or throughput increases.

In some embodiments, the one or more of the storage media 102 are storage media of the same or different type, that are aggregated into a storage pool. For example, the storage pool may include one or more CXL memory devices and one or more SSDs. The tier of one type of storage medium in the pool (e.g., CXL memory devices) may be higher than the tier of another type of storage medium (e.g., SSDs) in the pool.

In some embodiments, the host 100 may support one or more virtual machines (VMs) that may have its own instance of the processor 105, MMU 108, and/or machine memory 104. One of the one or more VMs may execute a process or application such as, for example, a big data analysis application, e-commerce application, database application, machine learning application, and/or the like. In some embodiments, a first VM executes a first application concurrently with a second application executed by a second VM.

In some embodiments, the host 100 includes a storage or memory manager 124 for implementing memory allocation and tiering operations for one or more applications. The memory manager 124 may be implemented via hardware, firmware (e.g., via an application-specific integrated circuit (ASIC)), software, or any combination of software, firmware and/or hardware. For example, the memory manager 124 may include computer program instructions that are executed by the processor 105 for checking performance of one or more memory tiers, allocating applications to a memory tier, and migrating data from one memory tier to another.

In some embodiments, the memory manager 124 is configured to identify a memory allocation request by an application and allocate a region in a memory tier. The memory tier may be selected based on historical information (e.g., prior performance of the memory tier) and/or preferences identified for the application. In some embodiments, the selected memory tier is one predicted to satisfy an SLA while minimizing execution cost of the application.

In some embodiments, the processor 105 (e.g., an application executed by a VM) generates requests for a storage medium 102. The requests may include requests to read/load data, write/store data, erase/flush data, and/or the like. In some embodiments, the processor 105 sends the requests to the storage medium 102 via the RC interface 112 and interface connections 106a-106c (collectively referenced as 106). Responses to the requests from the processor 105 may be delivered over the interface connections 106 to the RC interface 112, which in turn delivers the responses to the processor 105.

In some embodiments, the interface connections 106 (e.g., the connector and the protocol thereof) includes various general-purpose interfaces such as, for example, Ethernet, Universal Serial Bus (USB), and/or the like. In some embodiments, the interface connections 106 (e.g., the connector and the protocol thereof) may include (or may conform to) a Compute Express Link (CXL), Cache Coherent Interconnect for Accelerators (CCIX), dual in-line memory module (DIMM) interface, Small Computer System Interface (SCSI), Non Volatile Memory Express (NVMe), Peripheral Component Interconnect Express (PCIe), remote direct memory access (RDMA) over Ethernet, Serial Advanced Technology Attachment (SATA), Fiber Channel, Serial Attached SCSI (SAS), NVMe over Fabric (NVMe-oF), iWARP protocol, InfiniBand protocol, 5G wireless protocol, Wi-Fi protocol, Bluetooth protocol, and/or the like.

The RC interface 112 may be, for example, a PCIe interface configured to implement a root complex for connecting the processor 105 and the host main memory 104 to the storage media 102. The RC interface 112 may include one or more ports 114a-114c to connect the one or more storage media 102 to the RC. In some embodiments, the RC interface 112 is configured to translate a virtual address that may be included in a request from an application, into a physical address of the storage media 102.

The storage medium 102 may include one or more of a volatile computer-readable storage medium and/or non-volatile computer-readable storage medium. In some embodiments, one or more of the storage media 102 include any type of memory that is attached to a CPU or GPU, such as, for example, a CXL attached memory device (including volatile and persistent memory device), RDMA attached memory device, and/or the like, although embodiments are not limited thereto. The CXL attached memory device (simply referred to as CXL memory) may adhere to a CXL.mem protocol where the host 100 may access the device using commands such as load and store commands. In this regard, the host 100 may act as a requester and the CXL memory may act as a subordinate.

In some embodiments, one or more of the storage media 102 may also include volatile computer-readable storage medium such as random access memory (RAM), dynamic random access memory (DRAM), static random access memory (SRAM), fast page mode dynamic random access memory (FPM DRAM), extended data-out dynamic random access memory (EDO DRAM), synchronous dynamic random access memory (SDRAM), double data rate synchronous dynamic random access memory (DDR SDRAM), double data rate type two synchronous dynamic random access memory (DDR2 SDRAM), double data rate type three synchronous dynamic random access memory (DDR3 SDRAM), Rambus dynamic random access memory (RDRAM), Twin Transistor RAM (TTRAM), Thyristor RAM (T-RAM), Zero-capacitor (Z-RAM), Rambus in-line memory component (RIMM), dual in-line memory component (DIMM), single in-line memory component (SIMM), video random access memory (VRAM), cache memory (including various levels), flash memory, register memory, and/or the like.

The one or more storage media 102 may include non-volatile computer-readable storage medium such as a floppy disk, flexible disk, hard disk, solid-state storage (SSS) (for example a solid-state drive (SSD)), solid state card (SSC), solid state component (SSM), enterprise flash drive, magnetic tape, or any other non-transitory magnetic medium, and/or the like. A non-volatile computer-readable storage medium may also include a punch card, paper tape, optical mark sheet (or any other physical medium with patterns of holes or other optically recognizable indicia), compact disc read only memory (CD-ROM), compact disc-rewritable (CD-RW), digital versatile disc (DVD), Blu-ray disc (BD), any other non-transitory optical medium, and/or the like. Such a non-volatile computer-readable storage medium may also include read-only memory (ROM), programmable read-only memory (PROM), erasable programmable read-only memory (EPROM), electrically erasable programmable read-only memory (EEPROM), flash memory (for example Serial, NAND, NOR, and/or the like), multimedia memory cards (MMC), secure digital (SD) memory cards, SmartMedia cards, CompactFlash (CF) cards, Memory Sticks, and/or the like. Further, a non-volatile computer-readable storage medium may also include conductive-bridging random access memory (CBRAM), phase-change random access memory (PRAM), ferroelectric random-access memory (FeRAM), non-volatile random-access memory (NVRAM), magnetoresistive random-access memory (MRAM), resistive random-access memory (RRAM), Silicon-Oxide-Nitride-Oxide-Silicon memory (SONOS), floating junction gate random access memory (FJG RAM), Millipede memory, racetrack memory, and/or the like.

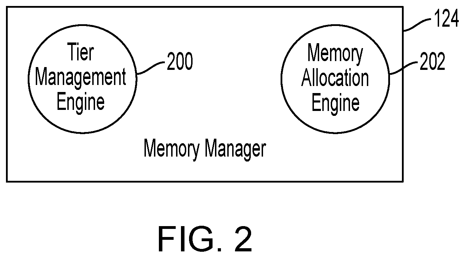

FIG. 2 depicts a block diagram of the memory manager 124 according to one or more embodiments. In some embodiments, the memory manager 124 is configured to be executed by the processor 105 based on instructions in the main memory 104. In some embodiments, the memory manager 124 includes a tier management engine 200 and a memory allocation engine 202. The one or more engines 200-202 may be executed concurrently via one or more processing threads. Also, although the one or more engines 200-202 may be implemented as separate functional units, a person of skill in the art will recognize that the functionality of the engines may be combined or integrated into a single engine, or further subdivided into further sub-engines without departing from the scope of the inventive concept.

In some embodiments, the tier management engine 200 is configured to check periodically (e.g., on a uniform or non-uniform basis), performance of one or more memory tiers (e.g., each memory tier) under different loads (e.g., demands) as the memory tiers process requests from the applications executed by the processor 105. Performance of a memory tier may include performance of one or more memory devices 122 associated with the tier. The performance of a memory device 122 may be a measurement, for example, of latency, throughput, and/or bandwidth of the memory device in processing a load or store request.

A performance score may be assigned to the memory tier based on the performance of the one or more memory devices 122. The performance score may be computed based on a mathematical formula that may combine latency, throughput, and/or bandwidth. In some embodiments, the lower the latency, the higher the throughput, which may translate to a higher performance score.

In some embodiments, the tier management engine 200 is configured to monitor for a condition or trigger for migrating an allocation of memory from one tier (e.g., a first tier) to another tier (e.g., a second tier). The condition for migration may be satisfied, for example, if the load of a current tier exceeds a historical load associated with the memory tier, and/or performance of the tier (e.g., based on the performance score) fails to meet one or more SLAs. In some embodiments, the tier management engine 200 is configured to determine the available memory capacity of one or more of the tiers, and select a tier for migrating data stored in the current tier to another tier with available memory capacity.

In some embodiments, one or more factors may be balanced for identifying the memory tier to which the data is to be migrated. The one or more factors may include compute and memory requirements of the application, and/or cost of the migration. The cost of the migration may include the cost of using the memory tier to which data is migrated. The cost may include, for example, a time cost and/or monetary cost. For example, the time cost of responding to a memory access request may increase, and the monetary cost decrease, the lower a memory device is located on the memory hierarchy.

In some embodiments, the memory allocation engine 202 is configured to allocate memory for an application (e.g., prior to a run or execution of the application). The memory tier to which the application is allocated may be selected based on one or more parameters or hints associated with the application. The one or more parameters may be identified manually by a programmer and/or automatically determined by a profiling tool. For example, the one or more parameters may indicate whether the application is bandwidth sensitive, capacity sensitive, and/or latency sensitive. For example, if the one or more parameters indicate that the application is bandwidth sensitive but not latency sensitive, the selected memory tier may be one includes a CXL memory device. In another example, if the one or more parameters indicate that the application is latency sensitive but not capacity sensitive, the selected memory tier may be the main memory 104.

The one or more parameters for selecting a memory tier may also identify a weight. The weight may be indicative of importance of the application or memory allocation. In some embodiments, the tier (e.g., an initial tier) at which the application is allocated may increase as the weight increases. In some embodiments, the one or more parameters is provided to the memory allocation engine 202 via an application programming interface (API).

In some embodiments, the memory allocation engine 202 is configured to predict performance of the application if the application were to be allocated to the memory tier. The predicted performance may be based on historical information associated with the memory tier such as, for example, descriptions of previous runs of applications allocated to the tier, performance (e.g., latency, bandwidth, etc.) of the applications on the tier, and/or the like.

If the predicted performance of the application that is allocated current memory tier satisfies the SLA, the memory allocation engine 202 may check a lower tier for determining whether a lower cost allocation is possible without violating the SLA. The memory allocation engine 202 may continue to check for lower memory tiers until the predicted performance of the lower memory tier no longer satisfies the SLA. In this manner, the memory that is allocated is one that minimizes cost while achieving SLA.

In some embodiments, the memory allocation engine 202 updates the memory allocation based on the execution or run of the application. For example, the memory allocation engine 202 may determine that the current allocation satisfies the SLA, and identify a memory device at a lower tier for allocating the application to the lower tier. The new allocation may be for a next run of the application.

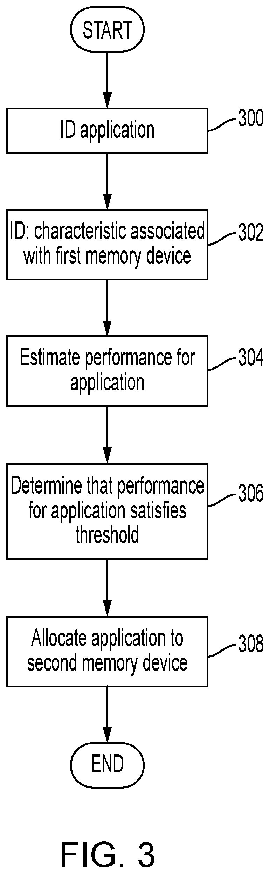

FIG. 3 depicts a flow diagram of a process for allocating memory to an application in a tiered memory system according to one or more embodiments. In some embodiments, the application is executed by a virtual machine. The processor 105 may invoke the memory manager 124 to allocate memory to the application (or virtual machine) prior to launching the virtual machine.

The process starts, and in act 300, the memory manager 124 (e.g., the memory allocation engine 202) identifies an application (e.g., a first application) to which memory is to be allocated. In some embodiments, the processor 105 invokes the memory manager 124 via an API call. The API call may provide a command (similar to a malloc command) to request memory for the application. The API call may include one or more parameters for the requested memory. The parameters may be manually selected by a programmer, and/or automatically determined by an application profiling tool (e.g., VTune Profiler). The parameters may include, for example, a size of the requested memory, and an indication of whether the application is bandwidth sensitive, capacity sensitive, and/or latency sensitive. The parameters may also identify a weight and a region identifier (ID). The weight may indicate importance of the application and/or memory allocation. The region ID may be used for identifying the region of memory allocated to the application. In some embodiments, the parameters are processed as hints by the memory manager 124 for selecting an initial tier of the memory hierarchy to make the memory allocation.

In act 302, the memory manager 124 identifies a characteristic associated with a first memory device . The characteristic of the first memory device may include a load, an access latency, and/or throughput of the first memory device. The characteristic may be identified based on historical data of prior runs of applications allocated to the first memory device.

In some embodiments, the first memory device is associated with a first tier of the memory hierarchy. In some embodiments, the selected first tier depends on the parameters or hints of the memory allocation request. For example, the higher the weight, the higher the selected tier. In another example, a capacity sensitive application may be allocated to a lower tier while a latency sensitive application may be allocated to a higher tier.

In act 304, the memory manager 124 estimates a performance of the application based on the characteristic associated with the first memory device. In some embodiments, the memory manager 124 predicts an amount of time that is expected to take to finish executing the application (referred to as expected finish or execution time) if the application were to be allocated to a region of the first memory device. The expected finish time may be based on the expected latency and/or throughput of the first memory device given the load on the memory device. For example, the estimated finish time may be calculated using a combination of historic data when running the same or similar applications, as well as the relative loads of the memory or storage. This could be accomplished by applying traditional statistical analysis techniques or machine learning techniques, such as neural networks or linear regression models.

In some embodiments, the memory controller 120 monitors responses to data access requests during prior runs of one or more applications, and maintains one or more metrics associated with load, access latency, and/or throughput of different memory devices 122. The one or more metrics may be stored in one or more historical records associated with one or more memory regions and tiers. The metrics information may be provided to the memory manager 124 for predicting the performance of the application if the application were to the assigned to the memory region and tier associated with the first memory device.

In act 306, a determination is made that the predicted performance of the application satisfies a threshold performance. The threshold performance may include, for example, a maximum access latency, a minimum throughput, and/or the like. The threshold performance may be determined, for example, based on the SLA associated with the application.

In some embodiments, if the estimated performance of the application satisfies the threshold performance, the memory manager 124 performs a check of a lower memory tier (e.g., a tier below the tier associated with the first memory device) to determine whether the allocation should be to a second memory device at the lower tier. The allocation to the second memory device may result in a more cost-efficient allocation than an allocation to the first memory device. In this regard, in act 308, the memory manager 124 allocates the application to a region of the second memory device.

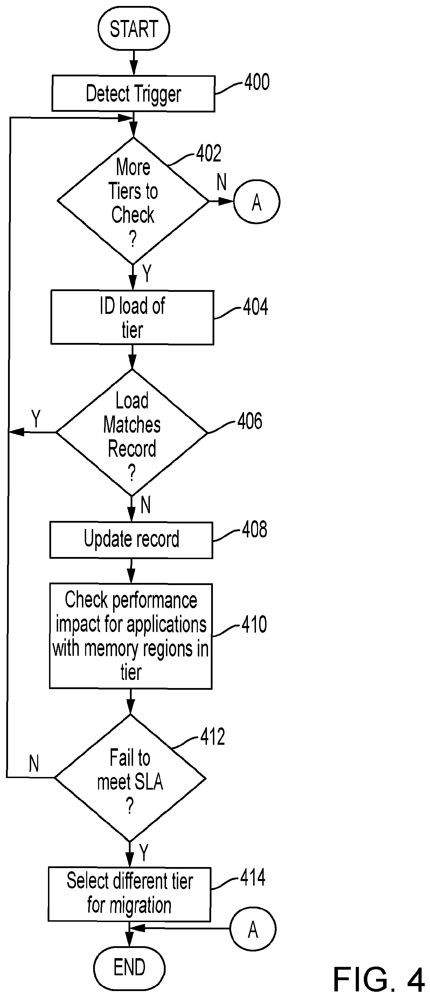

FIG. 4 depicts a flow diagram of a process for tiered memory management according to one or more embodiments. The process starts, and in act 400, the memory manager 124 (e.g., the tier management engine 200) detects a trigger for performing a check of one or more tiers of the memory hierarchy. The trigger may include, for example, passage of a certain amount of time since a last check, a condition of a memory device, and/or the like.

In act 402, a determination is made as to whether there are more memory tiers to check. If the answer is NO, the process ends.

If the answer is YES, the memory manager 124 identifies, in act 404, a load of the tier being checked. In some embodiments, the load of the tier may be based on the detected access latency and throughput of accesses to the memory devices 122 associated with the tier.

In act 406, a determination is made as to whether the load matches a record associated with the tier. The record may include, for example, prior (e.g., average) loads, latencies, and/or throughputs associated with the tier.

If the load matches the recorded load (e.g., within a certain range), the process returns to act 402 to check the performance of other tiers of the memory hierarchy.

If the load does not match the recorded load, the memory manager 124 updates the record in act 408 based on the current load. For example, the memory manager 124 may update the latency, bandwidth, and/or throughput of the tier based on the current load.

In act 410, the memory manager 124 checks the performance impact for applications with memory regions in the tier. A performance score of the tier may be computed for determining the performance impact. The performance score may be based on a combined latency, throughput, and/or bandwidth of one or more memory devices 122 associated with the tier based on the applications allocated to the one or more memory devices 122.

In act 412, a determination is made as to whether the performance fails to meet an SLA. For example, the SLA may not be satisfied if the performance score is lower than a performance score identified by the SLA.

If the answer is NO, and the SLA is satisfied despite the current load, the process returns to act 402 to check the performance of other tiers of the memory hierarchy.

If the answer is YES, and the SLA is not satisfied, a different (e.g., second) tier is selected in act 414 for migrating or moving data for applications allocated to the current tier. In some embodiments, the selection of the second tier is based on an algorithm configured to monitor the available memory capacity for the second tier, and balance compute and memory requirements of the second tier against a cost (e.g., in terms of energy consumption, money, etc.) of storing and retrieving data from the second tier. In some embodiments, the algorithm may determine feasibility of the migration of data to the second tier based on the considered factors relating to capacity, compute requirements, and/or cost. The algorithm for determining feasibility of the migration of data may include, for example, a banker's algorithm that may simulate the migration before deciding whether the migration should be allowed to continue.

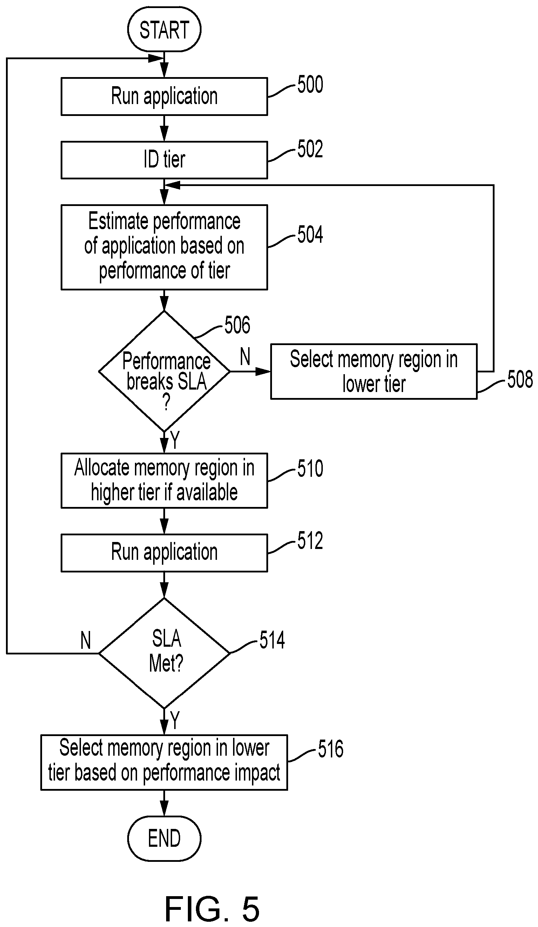

FIG. 5 depicts another flow diagram of a process for allocating memory to an application in a tiered memory system according to one or more embodiments. The memory allocation may occur when the application is run (e.g., each time the application is run). Depending on the context in which the application is run, the memory tier selected for the allocation may differ.

The process starts, and in act 500, the application is run by the processor 105 (e.g., a virtual machine).

In act 502, the memory manager 124 (e.g., the memory allocation engine 202) identifies an initial tier of the memory hierarchy for allocating memory to the application. The initial tier may be selected, for example based on parameters of an allocation command. The parameters may include, for example, a weight, a bandwidth sensitivity value, a capacity sensitivity value, and/or a latency sensitivity value.

The initial tier may also be selected based on historical information of prior runs of the application. In some embodiments, if the historical information indicates that a prior run of the application satisfied the SLA, the memory manager 124 selects a tier lower than a tier that was assigned in the prior run, as the initial tier for the current run of the application.

In act 504, the memory manager 124 predicts performance of the application if the application were to be assigned to the selected initial tier. In this regard, the memory manager 124 determines overall load and/or performance of the selected initial tier based on, for example, the historical information. In this regard, the tier management engine 200 may maintain a historical record of job descriptions, latencies, and/or execution times of applications allocated to the different tiers for prior runs of the applications. The record may also indicate whether SLA was satisfied during the prior runs. The record may be identified by a region ID and tier ID pair. In some embodiments, a finish time and/or other performance metric for a current run of the application on the selected initial tier is estimated based on the recorded load, latencies, and/or execution times of prior runs of applications on the selected initial tier.

In act 506, a determination is made as to whether the predicted performance of the application breaks the SLA. For example, the predicted performance may break the SLA if the predicted execution time of the application is greater than a maximum execution time identified in the SLA.

If the answer is NO, and the predicted execution time satisfies the SLA, the memory manager 124 selects, in act 508, a memory region in a tier lower than the current tier, and returns to act 504 for estimating performance of the application based on performance of the lower tier. The lower tier may result in a lower execution cost.

Referring again to act 506, if the predicted execution time breaks the SLA, the memory manager 124 allocates to the application, in act 510, a memory region in a higher tier, if available.

In act 512, the application is executed by the processor 105, and a performance (e.g., execution time) of the application may be obtained.

In act 514, a determination is made as to whether the performance satisfies the SLA. If the answer is YES, a lower memory tier is selected in act 516. The lower memory tier may be assigned to the application during a next run. In some embodiments, the selection of the lower memory tier is based on determining performance impact of the allocation to the lower tier and/or execution cost. For example, the selected lower memory tier may be one that maximizes performance of the memory system while minimizing the execution cost.

A person of skill in the art will recognize that embodiments of the present disclosure improve usage of a tiered memory system in a hyperscaler or data center. For example, more computing tasks may be able to be performed with a given amount of time and hardware resources by allocating the tasks to memory tiers that, although not the highest performant tiers, still achieve SLA matching performance and lowers execution cost.

One or more embodiments of the present disclosure may be implemented in one or more processors. The term processor may refer to one or more processors and/or one or more processing cores. The one or more processors may be hosted in a single device or distributed over multiple devices (e.g. over a cloud system). A processor may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processor, as used herein, each function is performed either by hardware configured, i.e., hard-wired, to perform that function, or by more general-purpose hardware, such as a CPU, configured to execute instructions stored in a non-transitory storage medium (e.g. memory). A processor may be fabricated on a single printed circuit board (PCB) or distributed over several interconnected PCBs. A processor may contain other processing circuits; for example, a processing circuit may include two processing circuits, an FPGA and a CPU, interconnected on a PCB.

It will be understood that, although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed herein could be termed a second element, component, region, layer or section, without departing from the scope of the inventive concept.

The terminology used herein is for the purpose of describing particular embodiments only and is not intended to be limiting of the inventive concept. Also, unless explicitly stated, the embodiments described herein are not mutually exclusive. Aspects of the embodiments described herein may be combined in some implementations.

As used herein, the terms "substantially," "about," and similar terms are used as terms of approximation and not as terms of degree, and are intended to account for the inherent deviations in measured or calculated values that would be recognized by those of ordinary skill in the art.

As used herein, the singular forms "a" and "an" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the inventive concept refers to "one or more embodiments of the present disclosure". Also, the term "exemplary" is intended to refer to an example or illustration. As used herein, the terms "use," "using," and "used" may be considered synonymous with the terms "utilize," "utilizing," and "utilized," respectively.

Although exemplary embodiments of systems and methods for allocating applications in tiered memory have been specifically described and illustrated herein, many modifications and variations will be apparent to those skilled in the art. Accordingly, it is to be understood that systems and methods for allocating applications in tiered memory constructed according to principles of this disclosure may be embodied other than as specifically described herein. The disclosure is also defined in the following claims, and equivalents thereof.

The systems and methods for allocating applications in tiered memory may contain one or more combination of features set forth in the below statements.

Statement 1. A system comprising: a first memory device; a second memory device; a processor coupled to the first memory device and the second memory device, the processor being configured to: identify a first application; identify a characteristic associated with the first memory device; estimate performance of the first application based on the characteristic associated with the first memory device; determine that the performance satisfies a threshold performance; and based on determining that the performance satisfies the threshold performance, allocate a region of the second memory device to the first application.

Statement 2. The system of Statement 1, wherein the first memory device is associated with a first tier of a memory hierarchy, and the second memory device is associated with a second tier of the memory hierarchy lower than the first tier.

Statement 3. The system of Statement 1, wherein the processor is further configured to: identify a parameter associated with the first application; and select the first memory device based on the parameter.

Statement 4. The system of Statement 3, wherein the parameter is associated with at least one of bandwidth, capacity, or latency.

Statement 5. The system of Statement 3, wherein the parameter includes a weight and the processor is configured to identify, based on the weight, a tier of a memory hierarchy to which the first memory device is associated.

Statement 6. The system of Statement 1, wherein the characteristic includes at least one of an access latency or throughput of the first memory device, and the threshold performance is satisfied based on the access latency being lower than a maximum access latency or the throughput being higher than a minimum throughput.

Statement 7. The system of Statement 1, wherein the performance includes execution time of the first application.

Statement 8. The system of Statement 1, wherein the performance is estimated for the first application based on historical information.

Statement 9. The system of Statement 8, wherein the historical information includes second performance information of the first application.

Statement 10. The system of Statement 1, wherein the processor is further configured to: identify a third performance of the first application allocated to the second memory device; determine that the third performance is below the threshold performance; and based on determining that the third performance is below the threshold performance, move data stored in the second memory device to the first memory device.

Statement 11. A method comprising: identifying a first application; identifying a characteristic associated with a first memory device; estimating performance of the first application based on the characteristic associated with the first memory device; determining that the performance satisfies a threshold performance; and based on determining that the performance satisfies the threshold performance, allocating a region of a second memory device to the first application.

Statement 12. The method of Statement 11, wherein the first memory device is associated with a first tier of a memory hierarchy, and the second memory device is associated with a second tier of the memory hierarchy lower than the first tier.

Statement 13. The method of Statement 11 further comprising: identifying a parameter associated with the first application; and selecting the first memory device based on the parameter.

Statement 14. The method of Statement 13, wherein the parameter is associated with at least one of bandwidth, capacity, or latency.

Statement 15. The method of Statement 13, wherein the parameter includes a weight and the method further includes identifying, based on the weight, a tier of a memory hierarchy to which the first memory device is associated.

Statement 16. The method of Statement 11, wherein the characteristic includes at least one of an access latency or throughput of the first memory device, and the threshold performance is satisfied based on the access latency being lower than a maximum access latency or the throughput being higher than a minimum throughput.

Statement 17. The method of Statement 11, wherein the performance includes execution time of the first application.

Statement 18. The method of Statement 11, wherein the performance is estimated for the first application based on historical information.

Statement 19. The method of Statement 18, wherein the historical information includes second performance information of the application.

Statement 20. The method of Statement 11 further comprising:
identifying a third performance of the first application allocated to the second memory device; determining that the third performance is below the threshold performance; and based on determining that the third performance is below the threshold performance, moving data stored in the second memory device to the first memory device.

## Claims

1. A system comprising:
a first memory device;
a second memory device; and
a processor coupled to the first memory device and the second memory device, the processor being configured to:
identify a first application;
identify a characteristic associated with the first memory device;
estimate performance of the first application based on the characteristic associated with the first memory device;
determine that the performance satisfies a threshold performance; and
based on determining that the performance satisfies the threshold performance, allocate a region of the second memory device to the first application.

2. The system of claim 1, wherein the first memory device is associated with a first tier of a memory hierarchy, and the second memory device is associated with a second tier of the memory hierarchy lower than the first tier.

3. The system of claim 1 or 2, wherein the processor is further configured to:
identify a parameter associated with the first application; and
select the first memory device based on the parameter.

4. The system of claim 3, wherein the parameter is associated with at least one of bandwidth, capacity, or latency.

5. The system of claim 3 or 4, wherein the parameter includes a weight and the processor is configured to identify, based on the weight, a tier of a memory hierarchy to which the first memory device is associated.

6. The system of any one of claims 1 to 5, wherein the characteristic includes at least one of an access latency or throughput of the first memory device, and the threshold performance is satisfied based on the access latency being lower than a maximum access latency or the throughput being higher than a minimum throughput.

7. The system of any one of claims 1 to 6, wherein the performance includes execution time of the first application.

8. The system of any one of claims 1 to 7, wherein the performance is estimated for the first application based on historical information.

9. The system of claim 8, wherein the historical information includes second performance information of the first application.

10. The system of any one of claims 1 to 9, wherein the processor is further configured to:
identify a third performance of the first application allocated to the second memory device;
determine that the third performance is below the threshold performance; and
based on determining that the third performance is below the threshold performance, move data stored in the second memory device to the first memory device.

11. A method comprising:
identifying a first application;
identifying a characteristic associated with a first memory device;
estimating performance of the first application based on the characteristic associated with the first memory device;
determining that the performance satisfies a threshold performance; and
based on determining that the performance satisfies the threshold performance, allocating a region of a second memory device to the first application.

12. The method of claim 11, wherein the first memory device is associated with a first tier of a memory hierarchy, and the second memory device is associated with a second tier of the memory hierarchy lower than the first tier.

13. The method of claim 11 or 12 further comprising:
identifying a parameter associated with the first application; and
selecting the first memory device based on the parameter.

14. The method of claim 13, wherein the parameter is associated with at least one of bandwidth, capacity, or latency.

15. The method of claim 13 or 14, wherein the parameter includes a weight and the method further includes identifying, based on the weight, a tier of a memory hierarchy to which the first memory device is associated.
